# EUROPEAN PATENT APPLICATION

(11) **EP 2 169 853 A1**
(43) Date of publication of application: **31.03.2010**
(21) Application number: 08305606.9
(22) Date of filing: 29.09.2008
(51) Int. Cl.: H04H 60/02, H04H 60/66

(54) **Control device and method for reducing zapping time between broadcasted contents**

(71) Applicant: Alcatel Lucent, 75008 Paris (FR)
(72) Inventor: Alberi Morel, Marie-Line, 91620, NOZAY (FR)
(74) Representative: Sciaux, Edmond

(57) **Abstract**

A control device (D), for a broadcast network (BN) intended for broadcasting contents of P channels to user terminals (T), comprises i) a management means (MM) arranged for grouping the P channels into K groups (with K≤N) according to at least one chosen criterion, and for associating a weighting factor to each of these groups, and ii) a grouping means (GM) arranged for grouping the contents according to the groups to which belong their respective channels in order these groups of content(s) be broadcasted according to a priority law depending on their associated weighting factors.

## Description

The present invention relates to broadcast networks, and more particularly to broadcasting of contents allowing users of terminals to switch (or "zap") rapidly from one content to another one.

One means here by "content" a set of multimedia data of the same type or of different types, such as television programs (associated to television channels) or radio programs (associated to radio channels) or else video services that are broadcasted to user terminals, possibly on demand (VoD), for instance.

In some domains, such as television (TV), terminal users frequently switch or zap from one (TV) channel (or service) to another one. There is a delay between switching and displaying of the content related to a newly selected channel (or service) on the user terminal, which depends mainly on the technique that is used by the broadcast network to broadcast the contents of the different channels (or services) it manages. This delay should be minimal for the user comfort.

Several solutions have been proposed to reduce the zapping time between channels. For instance, it is possible to provide the user terminals with an additive process chain which is dedicated to channel zapping, or to broadcast simultaneously all the channels or else to code the contents into scalable layers (one base layer and possibly one or more enhancement layers). These solutions give to the terminal user the impression that he gets quickly a new content, but in fact he gets first the new content with a lower quality than the previous one due to a trade-off required by the implementation of these solutions (minimization of the additional cost in term of capacity or performance loss of available functionalities). Moreover, these solutions require additive capacities and/or introduce technical constraints and/or a terminal power saving decreasing. So, they induce technical costs which depend on the number of channels that are managed.

Therefore, the invention aims at offering a new solution allowing to reduce the zapping time while minimizing the technical costs it induces and satisfying most of the terminal users.

For this purpose, it provides a control method for a broadcast network (intended for broadcasting contents of P channels to user terminals), and comprising the following steps:
i) grouping the P channels into K groups (with K≤P) according to at least one chosen criterion,
ii) associating a weighting factor to each of these K groups, and
iii) grouping the contents according to the groups to which belong their respective channels, in order these groups of content(s) could be broadcasted according to a priority law depending on their associated weighting factors.

The method according to the invention may include additional characteristics considered separately or combined, and notably:
- at least one criterion may be based on a media metric which is chosen amongst (at least) the channel audience, the content audience, a user subscription feature, the content type, the content duration, the content theme, the content localization, the type of channel bouquet, the number of channels in a bouquet, and a subscriber profile;
   ➢ each subscription feature may be chosen amongst (at least) the number of subscriber per channel, the price of subscription and the type of subscription;
   ➢ each subscriber profile may be chosen amongst (at least) the probability that an user having subscribed to a first channel wants to subscribe to a second channel, the probability that an user having subscribed to a first channel bouquet wants to subscribe to a second channel bouquet, the probability that an user watching a first channel wants to watch a second channel, and the probability that an user watches a channel during a fixed period of a day;
- at least one criterion may be a radio criterion;
- in step i) the grouping may be based on at least one criterion associated to a threshold which is either fixed or computed dynamically;
- in step iii) during broadcasting of group(s) of content(s), that is (are) associated with a chosen weighting factor, one applies a chosen technique, intended for reducing the zapping time between these contents and associated to this chosen weighting factor, to these contents;
   ➢ in step iii), when the contents are coded into a base layer and possibly at least one enhancement layer, then during broadcasting of the base layer and the possible enhancement layer(s) of the content(s) whose group(s) is (are) associated with a chosen weighting factor, one applies a chosen technique, intended for reducing the zapping time between these contents and associated to this chosen weighting factor, to these contents.

The invention also provides a control device, for a broadcast network (intended for broadcasting contents of P channels to user terminals), and comprising:
- a management means arranged for grouping the P channels into K groups (with K≤P) according to at least one chosen criterion, and for associating a weighting factor to each of these groups, and
- a grouping means arranged for grouping the contents according to the groups to which belong their respective channels in order these groups of content(s) be broadcasted according to a priority law depending on their associated weighting factors.

The device according to the invention may include additional characteristics considered separately or combined, and notably:
- the management means may be arranged to use at least one criterion associated to a threshold which is either fixed or computed dynamically;
- the grouping means may be arranged for grouping the contents whose channels belong to the group(s) associated with a chosen weighting factor, in order a chosen technique intended for reducing the zapping time between these contents and associated to this chosen weighting factor, could be applied to these contents during their broadcasting.

Other features and advantages of the invention will become apparent on examining the detailed specifications hereafter and the appended drawings, wherein:
- figure 1 schematically illustrates an example of broadcast network to which are connected a service server (or platform), provided with a control device according to the invention, and user terminals,
- figure 2 schematically illustrates an example of algorithm defining the first main step of a control process according to the invention, and
- figure 3 schematically illustrates two successive examples of burst of multiplexed time-sliced scalable contents generated by means of the control process according to the invention.

The appended drawings may not only serve to complete the invention, but also to contribute to its definition, if need be.

The invention aims at offering a control method and an associated device allowing to reduce the zapping time between appropriate channels associated to contents broadcasted by a broadcast network (or infrastructure), these appropriate channels being those between which users may switch with a high probability and having a great importance for an operator.

In the following description it will be considered as example that the contents are television programs associated to P television channels. But the invention is not limited to this example of contents. Indeed, it concerns any type of content defined by a set of multimedia data of the same type or of different types, and notably radio programs (associated to radio channels) or video services that are broadcasted to user terminals, possibly on demand (VoD), for instance.

Moreover, in the following description it will be considered that the broadcast network or infrastructure (BN) is of the DVB type (« Digital Video Broadcasting »). But the invention is not limited to this example of broadcast network or infrastructure. Indeed, it concerns any type of wired or wireless broadcast network or infrastructure capable of broadcasting contents to user terminals in broadcast mode or in multicast mode. So, the broadcast network or infrastructure (BN) may be also a DAB (« Digital Audio Broadcasting ») network or a fixed communication network (ADSL network, cable network or optical fiber network), or a cellular (or mobile) network (GSM, GPRS/EDGE, UMTS, CDMA (2000) or WiMAX), for instance.

More, in the following description it will be considered that the user terminals (T) are mobile (or cellular) telephones. But the invention is not limited to this type of terminal. Indeed, it concerns any type of equipment (or terminal or else station), fixed or mobile, and capable of being connected to a broadcast network or infrastructure in order to receive broadcasted contents. So, it may be also a fixed telephone, a fixed or portable computer, a personal digital assistant (PDA) equipped with a communication module, a content receiver and/or player, or a set top box (STB), for instance.

As mentioned before, the invention proposes a control method which can be implemented by a control device (D).

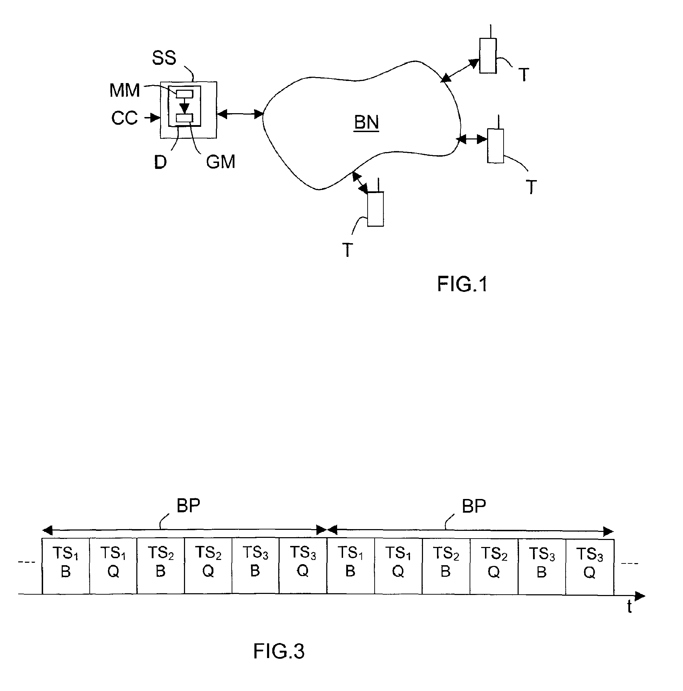

As schematically illustrated in figure 1, such a control device D may be located into a service server (or platform) SS which is connected or coupled to a broadcast network (or infrastructure) BN and which receives channel contents CC to be broadcasted to user terminals T that are capable of being connected or coupled to this broadcast network BN. But the control device D could be external to the service server (or platform) SS and possibly located into an other equipment connected to, or accessible through, the broadcast network BN.

The control method according to the invention comprises three main steps (i), (ii) and (iii).

The first main step (i) consists in grouping P channels (or services), each associated to contents (here television programs) to be broadcasted, into K groups, with K ≤P, according to at least one chosen criterion.

This first main step (i) may be implemented by a management module MM of the control device D.

One may used any type of criterion allowing to group channels, whatever the reason. It is important to note that several criteria of the same type or of different types may be used during the first main step (i). So, a criterion may be based on a media metric or it may be a radio criterion.

In case where a criterion is based on a media metric, it may be chosen amongst the channel audience (or popularity of a channel), the content audience (or popularity of a channel content), a user subscription feature, the content type, the content duration, the content theme, the content localization (i.e. national content or regional content), the type of channel bouquet, the number of channels in a bouquet, and a subscriber profile, for instance (and not limitatively).

If the media metric is a subscription feature, it may be chosen amongst the number of subscriber per channel, the price of subscription and the type of subscription (such as premium or on shot), for instance (and not limitatively).

If the media metric is a subscriber profile, it may be chosen amongst the probability that an user having subscribed to a first channel wants to subscribe to a second channel, the probability that an user having subscribed to a first channel bouquet wants to subscribe to a second channel bouquet, the probability that an user watching a first channel (which does not require any subscription) wants to watch a second channel (which does not also require any subscription), and the probability that an user watches a channel during a fixed period of a day, for instance (and not limitatively).

In case where a criterion is a radio criterion, it may be the type or policy of resource allocation of the content provider(s) or of the broadcast network operator, or the type of coding and modulation scheme, for instance (and not limitatively).

A criterion which is used by the management module MM can be associated to a threshold Sj which is either fixed (by the content provider(s) or the broadcast network operator) or computed (or adapted) dynamically, for instance depending on newly determined variations of a media metric or radio condition(s) or resource allocation or else coding and modulation scheme.

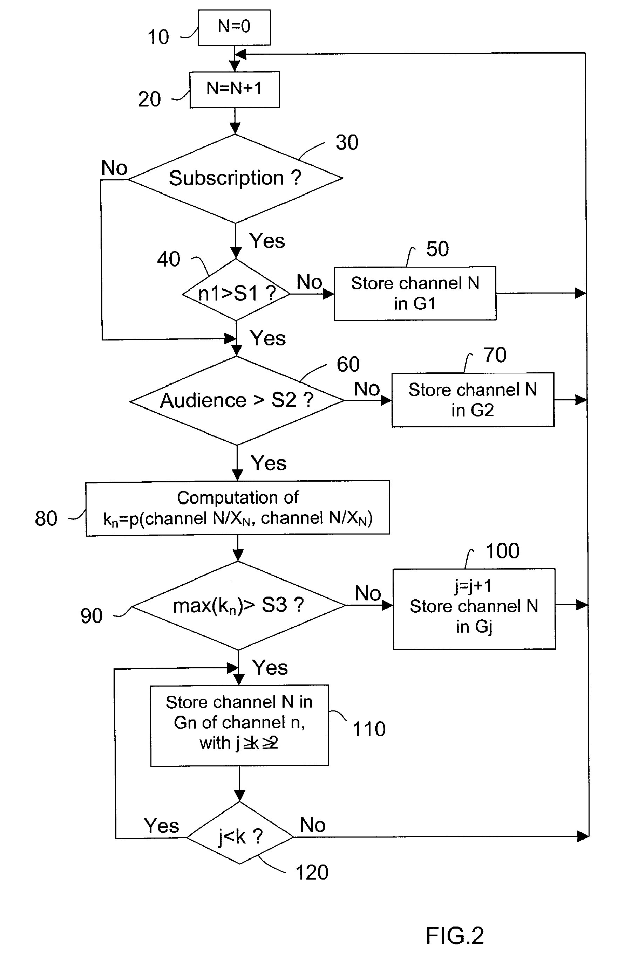

A non limiting example of algorithm defining the first main step (i) of the control process is schematically illustrated in figure 2.

The algorithm starts in a step 10 during which one (i.e. the management module MM) sets to zero (0) a variable N representing a channel (i.e. one of the P channels whose associated contents have to be broadcasted, and Nmax = P).

In a step 20, one (i.e. the management module MM) increments by one (+1) the value of the channel variable N (N → N+1).

In a step 30, one (i.e. the management module MM) may carry out a test intended for determining if some users (or subscribers) have subscribed to channel N.

In the negative, one goes directly to step 60.

In the affirmative, one (i.e. the management module MM) may carry out an other test intended for determining if the number n1 of users having subscribed to channel N is greater than a first threshold S1.

In the negative, one goes to step 60.

In the affirmative, one (i.e. the management module MM) goes to step 50 to store the identifier of channel N into a first group of channel(s) G1 (k=1). Then one goes back to step 20.

It is important to note that instead of the test of step 40, or in combination with the test of step 40, one may, for instance, carries out a test intended for determining if the subscription type of channel N is associated to a low or high priority level. The priority level may be defined in relation to a threshold. If the subscription type of channel N is associated to a low priority level (i.e. lower than a threshold) then one goes to step 50, while if it is associated to a high priority level (i.e. greater than a threshold) one goes to step 60.

In step 60, one (i.e. the management module MM) may carry out a test intended for determining if the audience of channel N is greater than a second threshold S2.

In the negative, one (i.e. the management module MM) goes to step 70 to store the identifier of channel N into a second group of channel(s) G2 (k=2). Then one goes back to step 20.

In the affirmative, one (i.e. the management module MM) goes to step 80 to compute the probability kₙ that an user switches between the channel N and a channel n (n ≠N), for each channel n with N-1 ≥n ≥1 and knowing X_{N} and Xₙ, where Xᵢ is a set comprising at least the channel bouquet type to which the channel i belongs and a subscriber profile.

Then in step 90, one (i.e. the management module MM) may carry out a test intended for determining if the greatest value max(kₙ) of all the probabilities kn (determined in step 80) is greater than a third threshold S3.

In the negative, one (i.e. the management module MM) goes to step 100 to increment by one (+1) the current value j of group index k (j → j+1 (new value)). Here the current value j is equal to 2. Then one stores the identifier of channel N into a j-th group of channel(s) Gk (k=j, where j is the new value of the group index). Then one goes back to step 20.

In the affirmative, one (i.e. the management module MM) goes to step 110 to store the identifier of channel N into the group of channel(s) Gn of channel n corresponding to the greatest value max(kₙ) of the probability kn. In this case, the group index k is greater than 2 and smaller than the current value of j.

Then in step 120, one (i.e. the management module MM) may carry out a test intended for determining if the current value j is smaller than k (j < k ?).

In the negative (i.e. if j = k), one (i.e. the management module MM) goes back to step 20.

In the affirmative (i.e. j < k), one (i.e. the management module MM) goes back to step 90.

Of course, other examples of algorithm or variants of the above described algorithm may be used for the first main step (i).

The second main step (ii) of the control method consists in associating a weighting factor to each of the groups Gk (G1 to GK) defined during the first main step (i).

This second main step (ii) may be implemented by the management module MM of the control device D.

Each weighting factor assigned to a channel group Gk is representative of the level of importance that a content provider or a broadcast network operator grants to this channel group Gk whatever the reason(s).

This level of importance may depend of one or more parameters, such as a media metric (channel audience, content audience, subscription feature, channel localization, for instance (and not limitatively)).

The third main step (iii) of the control method consists in grouping the contents according to the groups to which belongs their respective channels, before the groups of content(s) be broadcasted by the broadcast network BN.

This third main step (iii) may be implemented by a generation module GM of the control device D which is coupled to the management module MM. In the non limiting illustrated example, the generation module GM is located in the same equipment as the management module MM, i.e. the service server SS. But this is not mandatory. Indeed, the management module MM may be located in a first equipment, while the generation module GM is located in a second equipment, which is in charge of generating the bursts comprising the data defining the channel contents before their broadcasting towards the user terminals T. It is important to note that this broadcasting of the bursts (of groups Gk of channel contents) is carried out according to a priority law which depends on the weighting factors that are associated respectively to the groups Gk.

A burst may comprise several (at least two) "sub bursts" each dedicated to one of the groups Gk (G1-GP, k = 1 to P) and associated to a chosen time slice TSₖ.

For instance the priority law requires that during broadcasting of group(s) of content(s) associated with a chosen weighting factor, possibly the greatest one, one (for instance the service server (or platform) SS) applies a chosen technique, intended for reducing the zapping time between these contents and associated (or dedicated (possibly temporarily)) to this chosen weighting factor in an opportunistic way, to these contents.

One means here by "opportunistic" the fact that a chosen technique is associated to a chosen group of content(s) depending on the weighting factor associated to this group by an operator whatever the reason, possibly dynamically.

So thanks to the invention a user terminal T will receive in a burst a part of the contents of the channels that are grouped into the first group G1 with a chosen priority (possibly the greatest one), and possibly a part of the contents of the channels grouped into at least a second group G2 with this chosen priority, to which have been applied, during broadcasting, a chosen technique intended for reducing the zapping time which is associated (or dedicated) to their groups. Therefore, if a user is watching the content of a first channel of a first group G1 with his terminal T and switches to a second channel of this first group G1, his terminal T has already received the data of the content of the second channel (they are in one of the queue of the RTP buffer of his terminal T). So the user terminal T can display these data of the second channel quite immediately according to the associated chosen zapping time reduction technique. This means that the zapping (or switching) time is notably reduced in this case.

In fact, the invention is based on a statistical approach of the user behavior when he is watching and/or hearing contents. Content aggregators offer to subscribers or users channel bouquets comprising national or regional and/or general or thematic channels, and a subscriber or user generally zaps only on the channel belonging to the package he has subscribed to, and still more probably on the channel having the highest audience rating at the considered zapping instant. So, it is considered that it is not of interest to try to reduce the zapping time between a first channel and a second channel on which most of the subscribers or users do not switch, for instance because the first and second channels belongs to different bouquets or because few subscribers have subscribed to the second channel.

Since the zapping time reduction applies on selected channels (and therefore less channels), the cost of this reduction is minimized because it requires less additive capacity (notably in the user terminals T) and/or allows to reduce the power saving decreasing.

When the contents are coded into a base layer B and possibly at least one enhancement layer Q, i.e. according to a scalable video coding (or SVC), the priority law may require that one broadcasts in a first sub burst TS₁ the base layer B of the content(s) of the channel(s) belonging to the first group G1 with a chosen priority (or chosen weighting factor), possibly the greatest one, then one broadcasts in the following (second) sub burst TS₂ the possible enhancement layer(s) Q of the same content(s) whose first group G1 is associated with the chosen priority (or chosen weighting factor), then one possibly broadcasts in the following (third) sub bursts TS₃ the base layer B of the content(s) of the channel(s) belonging to a second group G2 with this chosen priority (or chosen weighting factor) or with a smaller priority, then one broadcasts in the following (fourth) sub burst TS₄ the possible enhancement layer(s) Q of the same content(s) whose second group G2 is associated with the chosen priority (or chosen weighting factor) or with a smaller priority, and so on. A chosen technique for reducing the zapping time, which is associated (or dedicated) to the chosen weighting factor of these groups G1 and G2, is applied to the contents of groups G1 and G2 during broadcasting.

It is recalled that a multimedia (especially video streaming) content server using scalable encoders (possibly of the H264 SVC type) generates single video streams into multiple layers of different visual importance : a base layer B and one or more enhancement layers Q (each one for an incremental enhancement of perceived quality at receiver output). The base layer B is broadcasted to all users in an area and can be independently decoded. It provides video basic quality and/or video basic spatial and temporal resolution (video with the minimal quality). The enhancement layers Q can only be decoded together with the base layer B and they further increase the video quality and/or video basic spatial and temporal resolution (video with the maximal quality).

Two successive examples of burst of multiplexed time-sliced scalable contents, generated by means of the control process according to the invention, are illustrated in figure 3. In this non limiting example a burst is broadcasted periodically by the broadcast network BN according to a period BP, for instance equal to 1 s (second), and each burst is divided in six sub bursts TSₖ B and TSₖ Q. The first sub burst TS₁ B is dedicated to the base layer B of the contents of three multiplexed channels (for instance channels 1, 2 and 6 which are national channels) that have been grouped together in a first group G1, the second sub burst TS₁ Q is dedicated to the first enhancement layer Q of the contents of the same three multiplexed channels (1, 2 and 6) of the first group G1, the third sub burst TS₂ B is dedicated to the base layer B of the contents of three multiplexed channels (for instance channels 3, 5 and 7 which are dedicated to information programs) that have been grouped together in a second group G2, the fourth sub burst TS₂ Q is dedicated to the first enhancement layer Q of the contents of the same three multiplexed channels (3, 5 and 7) of the second group G2, the fifth sub burst TS₃ B is dedicated to the base layer B of the contents of three multiplexed channels (for instance channels 4, 8 and 9 which are private channels with controlled access (by payment)) that have been grouped together in a third group G3, and the sixth sub burst TS₃ Q is dedicated to the first enhancement layer Q of the contents of the same three multiplexed channels (4, 8 and 9) of the third group G3.

In this example, the first G1, second G2 and third G3 groups are associated to the same weighting factor.

In this case, a user terminal T will receive, in each burst, a part of the contents of channels 1, 2 and 6 grouped into the first and second sub bursts TS₁ B and TS₁ Q, then a part of the contents of channels 3, 5 and 7 grouped into the third and fourth sub bursts TS₂ B and TS₂ Q, and finally a part of the contents of channels 4, 8 and 9 grouped into the fifth and sixth sub bursts TS₃ B and TS₃ Q. Therefore, if a user is watching the content of channel 6 with his terminal T and switches to channel 1, his terminal T has already received the data (at least the base layer ones) of the content of channel 1. So the user terminal T can display these data of channel 1 quite immediately with the basic quality at least during the zapping (or switching) phase. The quality of the displayed content of channel 1 will be improved very quickly because the enhancement layer Q of channel 1 content is received just after the base layer B of channel 1 content (consecutive sub bursts).

A device D according to the invention is preferably made of software modules, but it may be also made of electronic circuit(s) or hardware modules, or a combination of hardware and software modules.

The invention is not limited to the embodiments of control device, server and control method described above, only as examples, but it encompasses all alternative embodiments which may be considered by one skilled in the art within the scope of the claims hereafter.

## Claims

1. Control method for a broadcast network (BN) intended for broadcasting contents of P channels to user terminals (T), **characterized in that** it comprises the following steps: i) grouping said P channels into K groups (with K≤P) according to at least one chosen criterion, ii) associating a weighting factor to each of said groups, and iii) grouping said contents according to the groups to which belong their respective channels in order said groups of content(s) could be broadcasted according to a priority law depending on their associated weighting factors.

2. Control method according to claim 1, wherein at least one criterion is based on a media metric chosen in a group comprising at least the channel audience, the content audience, a user subscription feature, the content type, the content duration, the content theme, the content localization, the type of channel bouquet, the number of channels in a bouquet, and a subscriber profile.

3. Control method according to one of claims 1 and 2, wherein at least one criterion is a radio criterion.

4. Control method according to one of claims 1 to 3, wherein in step i) said grouping is based on at least one criterion associated to a threshold which is either fixed or computed dynamically.

5. Control method according to one of claims 1 to 4, wherein in step iii) during broadcasting of group(s) of content(s), associated with a chosen weighting factor, one applies a chosen technique, intended for reducing the zapping time between these contents and associated to this chosen weighting factor, to these contents.

6. Control method according to claim 5, wherein in step iii), when said contents are coded into a base layer and possibly at least one enhancement layer, during broadcasting of the base layer and the possible enhancement layer(s) of the content(s) whose group(s) is (are) associated with a chosen weighting factor, one applies a chosen technique, intended for reducing the zapping time between these contents and associated to this chosen weighting factor, to these contents.

7. Control device (D) for a broadcast network (BN) intended for broadcasting contents of P channels to user terminals (T), **characterized in that** it comprises i) a management means (MM) arranged for grouping said P channels into K groups (with K≤P) according to at least one chosen criterion, and for associating a weighting factor to each of said groups, and ii) a grouping means (GM) arranged for grouping said contents according to the groups to which belong their respective channels in order said groups of content(s) be broadcasted according to a priority law depending on their associated weighting factors.

8. Control device according to claim 7, wherein said management means (MM) is arranged to use at least one criterion based on a media metric chosen in a group comprising at least the channel audience, the content audience, a user subscription feature, the content type, the content duration, the content theme, the content localization, the type of channel bouquet, the number of channels in a bouquet, and a subscriber profile.

9. Control device according to one of claims 7 and 8, wherein said management means (MM) is arranged to use at least one criterion which is a radio criterion.

10. Control device according to one of claims 7 to 9, wherein said management means (MM) is arranged to use at least one criterion associated to a threshold which is either fixed or computed dynamically.

11. Control device according to one of claims 7 to 10, wherein said grouping means (GM) is arranged for grouping said contents whose channels belong to the group(s) associated with a chosen weighting factor, in order a chosen technique intended for reducing the zapping time between these contents and associated to this chosen weighting factor, could be applied to these contents during their broadcasting.

12. Server (SS) for a broadcast network (BN) intended for broadcasting contents of P channels to user terminals (T), **characterized in that** it comprises a control device (D) according to one of claims 7 to 11.
